Europäisches Patentamt

(19) European Patent Office

Office européen des brevets

(11) Publication number: **0 257 839**
**A1**

## (12) EUROPEAN PATENT APPLICATION

(21) Application number: 87306835.7

(22) Date of filing: 31.07.87

(51) Int. Cl.⁴: **A01C 1/00** , **A01F 12/42**

(30) Priority: 03.08.86 NZ 216746

(43) Date of publication of application:
02.03.88 Bulletin 88/09

(84) Designated Contracting States:
AT BE CH DE ES FR GB GR IT LI LU NL SE

(71) Applicant: **Lyon, Colin**
**Opihi, 12 RD**
**Pleasant Point(NZ)**

(72) Inventor: **Lyon, Colin**
**Opihi, 12 RD**
**Pleasant Point(NZ)**

(74) Representative: **Green, Alan James et al**
**SANDERSON & CO. European Patent**
**Attorneys 34, East Stockwell Street**
**Colchester Essex CO1 1ST(GB)**

(54) **Apparatus and process for the de-awning of seed and seed whenever de-awned thereby.**

(57) The invention provides an apparatus and process for removing the awn from seeds.

In the invention the apparatus comprises de-awning means 28 to remove the awns from seeds conveyed past said means on seed support and conveying means 1 providing a multiplicity of seed holding apertures 2. The apertures 2 are for holding seeds individually such that the awn thereof is exposed for de-awning and said means 1 is arranged continuously to convey seeds past said de-awning means 28. Seed supply means 20 to 26 deposit seeds onto said seed support and conveying means 28 and to assist in causing seeds deposited thereon to be entered individually into said seed holding apertures 2 there are means 15 to 19 for causing said support and conveying means to vibrate. In addition, there are means 31 arranged to collect the de-awned seed from said seed support and conveying means 1 after de-awning.

The process of the invention for removing the awn from seeds generally comprises the steps of depositing seeds onto a moving support providing a multiplicity of seed holding apertures, causing the support to vibrate such that seeds are entered individually into the apertures as they are deposited, removing the awns from the seeds as they are conveyed past de-awning means, and collecting the de-awned seeds.

Also, the invention includes seed when de-awned by the above apparatus or process.

FIG 1

## APPARATUS AND PROCESS FOR THE DE-AWNING OF SEED AND SEED WHENEVER DE-AWNED THEREBY

The invention comprises an apparatus and process for removing the awn from seeds.

Many types of seed, such as seed of the Bromus species, have a tail or awn which is desirably removed before planting of the seed. Prairie Grass seed is an example.

At least one automated deawning apparatus and process has previously been proposed, and is described in New Zealand patent specification No. 192811 to ETS Loiseau of France. The primary difficulty with automated deawning apparatus and processes is satisfactorily holding the seed during the deawning operation and particularly in entering the seeds individually into the seed holding means. Typically in a continuous deawning apparatus and process a much larger than necessary number of seeds are supplied to the seed holding means on the basis that at least some of these seeds, if not all, will successfully be entered into or taken up by the seed holding means for deawning, and the balance of seeds unsuccessfully taken up by the seed holding means is collected for recycling.

The present invention provides an improved or at least alternative form of de-awning apparatus and process.

In broad terms the present invention may be said in a first aspect to comprise apparatus for removing the awn from seeds, comprising:

de-awning means to remove the awns from said seeds as same are conveyed past said de-awning means,

seed support and conveying means providing a multiplicity of seed holding apertures therein for holding seeds individually such that the awn thereof is exposed for de-awning and arranged to continuously convey seeds past said de-awning means;

seed supply means for depositing seeds onto said seed support and conveying means and means for causing said support and conveying means to vibrate whereby to assist in causing seeds deposited thereon to be entered individually into said seed holding apertures, and

means arranged to collect the de-awned seed from said seed support and conveying means after de-awning.

Preferably the seed support and conveying means is substantially in the form of a cylinder mounted for rotation about it's longitudinal axis and comprising said multiplicity of seed holding apertures spaced over the exposed surface of the cylinder and extending substantially towards the longitudinal axis of the cylinder from the surface thereof, and the deawning means is positioned in relation to the cylinder such that on rotation of the cylinder seeds held in the seed holding apertures of the cylinder are conveyed past the de-awning means.

Preferably the seed supply means is adapted to release the seeds for de-awning over the cylinder from above, whereby the seeds are deposited on the cylinder by falling under gravity. The seed supply means may comprise a bulk supply of seeds in the form of a seed hopper and means for spreading seeds delivered from this bulk supply above the cylinder, such as a vibrating member extending over the cylinder below the bulk seed supply/hopper and comprising a multiplicity of seed releasing apertures through the spreading member whereby seeds delivered from the bulk supply are caught on and spread over the spreading member to fall therefrom through said apertures to deposit on the cylinder.

Preferably the de-awning means comprises a longitudinally extending flame burner positioned relative to the cylinder to provide a flame extending the length of the cylinder, whereby seeds held in the seed holding apertures are de-awned by burning of the awns thereof by said flame as same are conveyed past the flame burner.

In broad terms the present invention may be said in a second aspect to comprise a process for removing the awn from seeds, comprising the steps of:

depositing seeds by a seed supply means onto a moving seed support and conveying means providing a multiplicity of seed holding apertures therein for holding seeds individually such that the awn thereof is exposed for de-awning and causing said support and conveying means to vibrate, such that said seeds are entered individually into said apertures as they are deposited,

causing de-awning means to remove the awns from said seeds as they are conveyed past said de-awning means by said seed support and conveying means, and

collecting the de-awned seed by means arranged to collect the de-awned seed from said seed support and conveying means.

Preferably the seed support and conveying means is substantially in the form of a cylinder rotating about it's longitudinal axis and comprising said multiplicity of seed holding apertures spaced over the exposed surface thereof and the de-awning means is positioned in relation to the cylinder such that seeds held in the seed holding apertures are conveyed past the de-awning means by rotation of the cylinder.

Preferably the de-awning means comprises a longitudinally extending flame burner positioned relative to the cylinder and providing a flame extending the length of the cylinder whereby seeds held in said multiplicity of apertures are de-awned by burning of the awns thereof by said flame as same are conveyed past the flame burner.

The invention encompasses seed whenever de-awned by the apparatus or process of the invention.

A preferred form of apparatus of the invention is illustrated in the accompanying drawings, with reference to which the apparatus and process of the invention will be further described by way of example. In the drawings:

Fig. 1 is a three-quarter perspective view from one side of the preferred form apparatus,

Fig. 2 is a three-quarter perspective view from the other side of the preferred form apparatus, with a part thereof shown cut-away, and

Fig. 3 is a cross-sectional view of a part of the seed supporting and conveying cylinder and flame burner de-awning means of the preferred form apparatus.

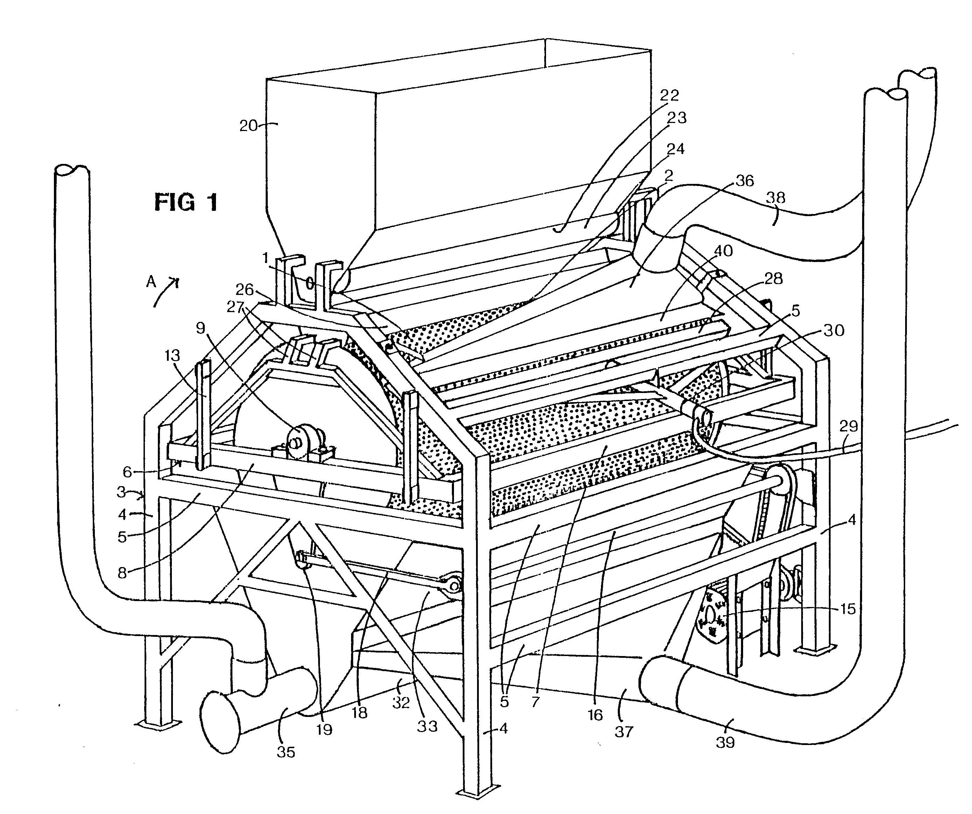

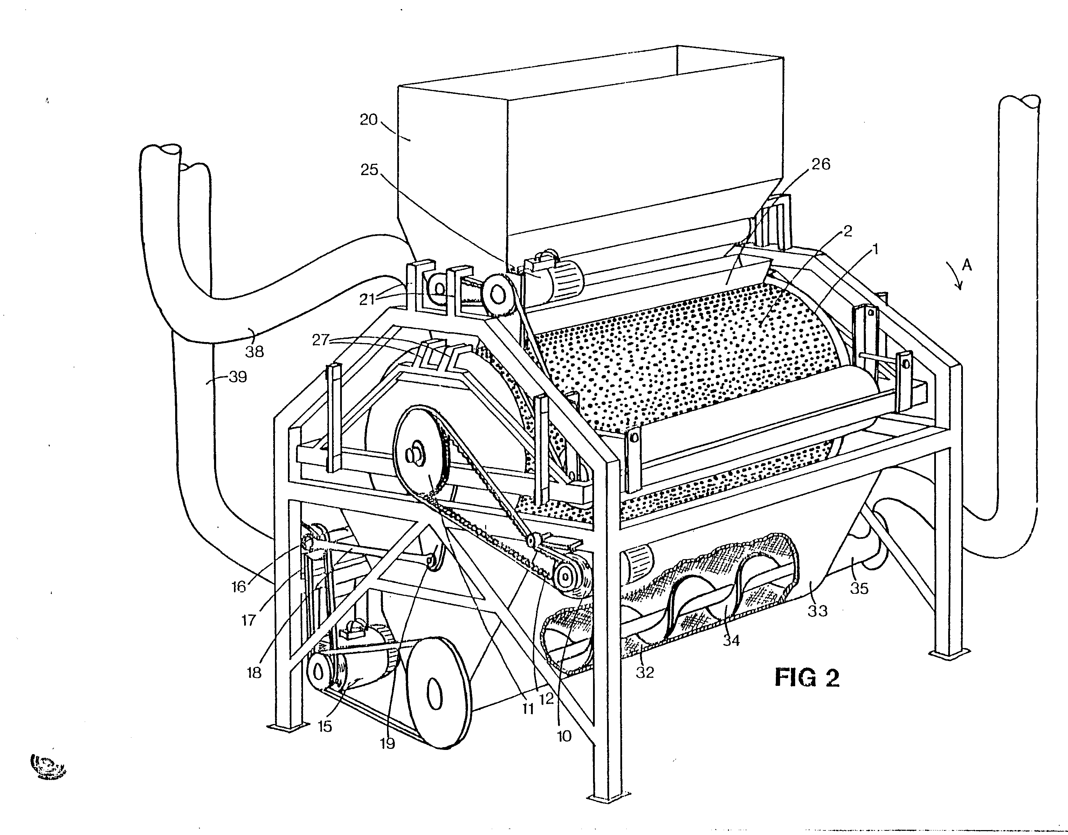

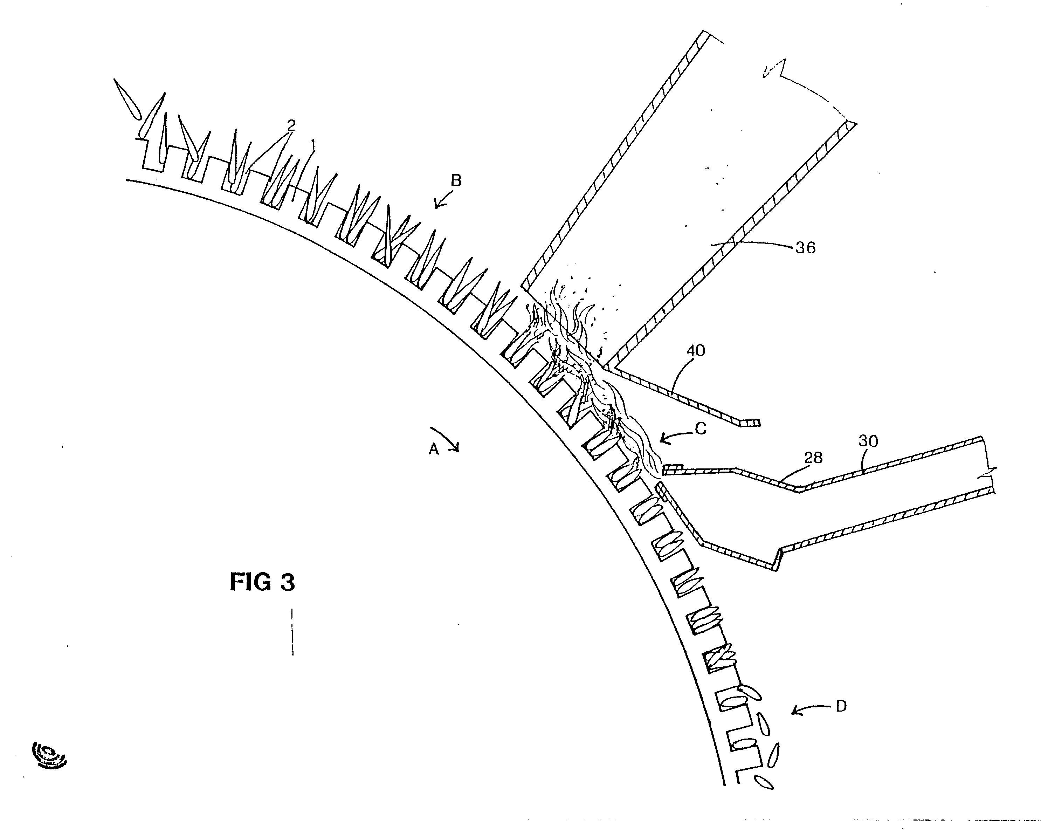

In the preferred form apparatus the seed support and conveying means is substantially in the form of a cylinder 1, comprising a multiplicity of seed holding apertures 2 indicated as dots in Figs 1 and 2, and more particularly shown in Fig. 3 as will be further described The seed holding apertures 2 are spaced over the exposed surface of the cylinder 1 and extend generally in the preferred form towards the longitudinal axis thereof. The seed holding apertures may be of any suitable shape or form and dimensions, for any particular seed type to be de-awned, and in the preferred form apparatus, which is suitable for the de-awning of Prairie grass seed, the apertures 2 comprise round holes of approximately 11 mm in depth and 10 mm in diameter. The cylinder 1 might be formed by providing two circular end plates for the cylinder and forming a section of initially sheet material such as alumunium alloy, of a thickness sufficient to accommodate the apertures 2, about the end plates into a cylindrical shape and securing the cylinder parts to a permanent form, and then drilling the seed holding apertures 2 into the cylinder surface as blindholes, for example.

Alternative to the cylinder 1 of the preferred form apparatus the seed support and conveying means could comprises any other conveyor or the like comprising seed holding apertures and arranged to move same past the seed supply means and de-awning means as will be described. One alternative form of conveyor is described in New Zealand patent specification No. 192811, for example.

The preferred form apparatus comprises a main frame for the apparatus generally indicated at 3, formed by upright members 4 and cross members 5, and which supports a sub-frame 6 mounting the cylinder 1 for rotation about it's longitudinal axis, in the direction of arrows A in the drawings. The sub-frame 6 is formed by longitudinal members 7 and transverse members 8, and the cylinder 1 is mounted to the sub-frame 6 by way of bearings 9 provided at either longitudinal end of the cylinder on the transverse members 8 as shown. The cylinder 1 is driven, in the preferred form, by an electric motor 10 coupled to a drive wheel 11 provided to one end of the cylinder via a drive belt 12, as best shown in Fig. 2. In operation of the apparatus the cylinder is driven at a relatively slow speed, in the preferred form of the order of 2 to 3 revolutions per minute, by the motor 10.

The sub-frame 6 mounting the cylinder 1 is supported from the main frame 3 by wooden hangers 13 depending from an upper part of the main frame 3, towards either corner thereof, to the transverse members 8 of the sub-frame, towards either corner thereof, whereby the sub-frame 6 and cylinder 1 are in effect suspended from an upper part of the main frame 3, securely but in such a manner as will allow for vibration of the cylinder 1 and sub-frame 6 relative to the main frame 3. Means for causing the cylinder 1 to vibrate, whereby seeds deposited on the cylinder will be entered individually into the seed holding apertures 2 in the preferred form operates on the sub-frame 6 to cause same to vibrate relative to the main frame 3. The arrangement of wooden hangers 13 whereby the sub-frame 6 is supported from the main frame 3 has been found suitable for allowing smooth vibration of the sub-frame 6 and cylinder 1. Alternative arrangements that might be employed include rubber or other flexible mounting of the sub-frame 6 from the main frame 3, for example. The means to cause the sub-frame 6 and cylinder 1 to vibrate in the preferred form apparatus includes an electric motor 15 driving an eccentric shaft 16 via a pulley/drive belt arrangement 17; the eccentric shaft 16 is mounted for rotation across the apparatus as shown and is connected to the sub-frame 6/cylinder 1 at either end thereof by connecting arms 18 which are fixed by suitable bearings to members 19 depending downwardly from the sub-frame 6 thereof as shown at one end, and which are eccentrically connected to the shaft 16 at their other ends. The shaft 16 in operation of the preferred form apparatus rotates at of the order of 600 to 1000 rpm to cause the sub-frame 6 and cylinder 1 to vibrate at of the order of 10 to 14 cycles per second. The vibration of the cylinder 1 assists in causing seeds deposited thereon, as will be described, to be entered individually into the seed holding apertures 2.

In the preferred form seeds to be de-awned are deposited onto the cylinder 1 by release of the seeds from above, whereby the seeds are deposited on same by falling under gravity. The seeds are released from a bulk supply of seeds, in the preferred form in the form of a hopper 20 mounted to the main frame 3 of the apparatus by mounts 21. In the preferred form the hopper 20 has a longitudinally extending aperture 22 towards the base of the hopper, in which is positioned a feed roller 23. The dimensions of the feed roller/aperture and positioning of the roller are such that a longitudinally extending outlet for seed is defined between the roller and an edge 24 of the aperture 22. In operation of the apparatus the roller 23 is driven by an electric motor 25, which can be seen in Fig. 2. Seed is placed in the hopper and as the feed roller 23 rotates seed will be delivered from the longitudinally extending seed outlet defined between the roller and the edge 24 of the aperture 22.

Means for spreading seeds delivered from the bulk supply of seeds/hopper 20 over the cylinder 1 is provided, in the preferred form in the form of a vibrating tray 26 the bottom of which forms a vibrating member extending over the cylinder 1 below the outlet from the hopper 20. The bottom of the tray 26 has a multiplicity of apertures of a size through which seed may pass formed through same, and the tray 26 is so positioned that seed released from the hopper and descending under gravity towards the cylinder 1 will be caught in the tray. The tray 26 is supported so as to extend over the cylinder 1 as shown by way of mounts 27 whereby the tray is mounted to the sub-frame 6 so that it will vibrate therewith. In operation of the apparatus seeds caught on the vibrating member forming the bottom of the tray 26 will by vibration tend to be spread over the tray prior to falling therefrom, through the apertures in the bottom of the tray, to deposit on the cylinder 1. The seeds falling from the tray 26 tend to be 'sprinkled' and are spread over a greater area above the cylinder 1 than would otherwise be the case.

It is within the scope of the invention for other forms of seed supply means for depositing seeds onto the cylinder 1 (or other seed support and conveying means) to be employed in other forms of the apparatus of the invention. The seed supply means may take any form that will effectively deliver seeds to be deposited on the cylinder 1, and could comprise a curved slide arrangement, as shown in the drawings of the basic New Zealand application from which priority for this patent is claimed, or an extending tray positioned adjacent the support cylinder 1 and arranged to vibrate in such a manner, or so formed, that seeds tend to align into a head-first position in relation to the cylinder and progress towards the cylinder to be taken up thereby, or seeds could simply be delivered towards the cylinder from an appropriate hopper outlet without requiring separate seed spreading means in the form of the tray 26 or the like. When the seed support and conveying means, comprising the cylinder 1 in the preferred form apparatus shown in the drawings, is vibrated during operation, in accordance with the invention, so long as the seeds are deposited on the support and conveying means they will tend to be entered into the seed holding apertures thereof by vibration.

De-awning means to remove the awns from the seeds supported by the cylinder 1 as they are conveyed past same is provided in the preferred form in the form of a longitudinally extending flame burner 28 mounted to the apparatus main frame 3 so as to extend longitudinally thereof and relative to the cylinder 1 to provide a flame extending substantially the length of the cylinder, whereby seeds held in the seed holding apertures 2 are deawned by burning of the awns thereof by the flame of the flame burner 28 as same are conveyed past same by rotation of the cylinder 1. This is more particularly shown in Fig. 3 of the drawings, wherein arrow B generally indicates seed entered into the seed holding apertures from the hopper 20 via the spreading tray 26 as any particular part of the cylinder 1 progresses beneath same, whilst arrow C indicates seed passing the burner, the awns of which are removed by same. The flame burner 28 may comprise a gas burner comprising a number of gas outlets along the length of the burner, and supplied with gas via a gas supply pipe 29 and gas supply manifold 30. It is within the scope of the invention for other forms of de-awning means to be used, such as an electric high-resistance "hot wire" or element, or a plurality of same, an arrangement of de-awning blades, or the like.

The preferred form apparatus includes means arranged to collect the de-awned seed after de-awning in the form of a collection tray generally indicated at 31, positioned below the cylinder 1 and mounted to the main frame 3 of the apparatus. The collection tray 31 is of a substantial V-shape in cross-section as shown, comprising a lower part 32 and side walls 33 extending therefrom. As seeds supported and conveyed by the cylinder 1 progress past the de-awning flame burner 28 they will fall by gravity from the seed holding apertures 2, as indicated by arrow D in Fig. 3, to be collected in the collection tray 31. A worm 34, shown through a cut-away part of the collection tray in Fig. 2, delivers the accumulated seed from the collection tray to the take-up head 35 of a pneumatic seed conveying apparatus (not fully shown in the drawings) whereby the seed is pneumatically delivered into bags, sacks or the like for the seed, for example.

In other forms of apparatus of the invention other forms of de-awned seed collection means may be employed. It is possible with forms of seed support and conveying means other than the cylinder 1 for the seeds to be withdrawn from the seed holding apertures by suction or the like, for example. Operation of the preferred form apparatus generates amounts of soot and dust and the like and it is desirable that this be withdrawn from the atmosphere surrounding the apparatus. Soot and dust generation tends to occur primarily adjacent the flame burner 28 during operation of same, and in addition within the interior of the de-awned seed collection tray 31 as the seeds, and burnt debris also contained therein, fall from the seed holding apertures. The preferred form apparatus includes suction means to withdraw soot from the atmosphere adjacent the flame burner and over the collection tray, in the form of suction manifolds 36 and 37, supplied with suction over ducts 38 and 39, which convey the soot and the like to the exterior. The manifold 36 is mounted adjacent the flame burner 28 and the intake of same extends substantially the length thereof. In use, soot and other fragments of awn burnt from the seeds will tend to be taken up into the manifold 38 to be conveyed away, as graphically illustrated in Fig. 3. The manifold 38 includes a longitudinally extending guard 40 extending from the lower edge thereof as shown. The manifold 39 communicates with the interior of the seed collection tray, to withdraw soot and the like from the atmosphere thereof generated by falling of seed into same.

Operation of the preferred form apparatus described, for the de-awning of seeds in accordance with the process of the invention, is as follows. On start up of the apparatus the cylinder 1 is driven by the motor 10 to rotate continuously at about 2 to 3 rpm. Seeds are delivered from the hopper 20 by way of the feed roller 23 as described; the roller operates to deliver seeds from the hopper 20 at a regular rate, which then falls under the influence of gravity to be caught in the vibrating tray 26. Seeds tend to spread over the tray prior to falling therefrom over the rotating cylinder 1. As the seeds are deposited on the cylinder vibration thereof assists the seeds in being entered into the seed holding apertures 2. As the cylinder 1 progresses, the seeds delivered into the seed holding apertures at any particular moment are conveyed past the flame burner 28 whereby the awns of the seeds are burnt and removed, the fragments of material being taken up into the suction manifold 36. As the cylinder 1 progresses further the seeds are deposited from the seed holding apertures into the collection tray 31 where they are collected, and from where they are then delivered by the worm 34 to be conveyed for bagging or the like.

The vibration of the cylinder 1, in the preferred form apparatus, or equivalent seed support and conveying means in other forms of apparatus of the invention, in accordance with the process of the invention, and preferably also the seed spreading means such as the tray 26 in the preferred form, is important in causing seeds falling towards and deposited on the cylinder to be entered 'head first' into the seed holding apertures thereof with the awns of the seeds exposed. In runs of the apparatus conducted without vibration as stated, minimal entry of seeds correctly oriented into the seed holding apertures is achieved.

The foregoing describes the apparatus and process of the invention including a preferred form thereof, by way of example. Alterations and modifications as will be obvious to those skilled in the art are intended to be incorporated within the scope hereof, which is defined in the following claims.

## Claims

1. Apparatus for removing the awn from seeds, comprising:

de-awning means to remove the awns from said seeds as same are conveyed past said de-awning means,

seed support and conveying means providing a multiplicity of seed holding apertures therein for holding seeds individually such that the awn thereof is exposed for de-awning and arranged to continuously convey seeds past said de-awning means;

seed supply means for depositing seeds onto said seed support and conveying means and means for causing said support and conveying means to vibrate whereby to assist in causing seeds deposited thereon to be entered individually into said seed holding apertures, and

means arranged to collect the de-awned seed from said seed support and conveying means after de-awning.

2. Apparatus as claimed in claim 1, wherein said seed support and conveying means is substantially in the form of a cylinder mounted for rotation about it's longtidunal axis and comprising said multiplicity of seed holding apertures spaced over the exposed surface thereof and extending substantially towards said longtidunal axis from said surface, and wherein said deawning means is positioned in relation to said cylinder such that on rotation of said cylinder about said longtidunal axis seeds held in said apertures are conveyed past said de-awning means.

3. Apparatus as claimed in claim 2, wherein said seed supply means is adapted to release said seeds for de-awning over said cylinder from above whereby said seeds are deposited on same by falling under gravity.

4. Apparatus as claimed in claim 3, wherein said seed supply means comprises a bulk supply of seeds and means for spreading seeds delivered from said bulk supply above said cylinder.

5. Apparatus as claimed in claim 4, wherein said seed spreading means comprises a vibrating member extending over said cylinder below said bulk seed supply and comprising a multiplicity of seed releasing apertures through said spreading member from said bulk supply to said cylinder whereby seeds delivered from said bulk supply are caught on and spread over said member to fall therefrom through said apertures to deposit on said cylinder.

6. Apparatus as claimed in claim 5, including a main support frame for said apparatus and a sub-frame supported by said main frame and mounting said cylinder, and wherein said means for causing said support and conveying means to vibrate operates on said sub-frame to cause said sub-frame to vibrate relative to said main frame.

7. Apparatus as claimed in claim 6, wherein said seed spreading member is additionally mounted to said sub-frame, over said cylinder.

8. Apparatus as claimed in claim 7, wherein said seed spreading member forms the bottom of a tray adapted to catch seeds delivered from said bulk supply.

9. Apparatus as claimed in claim 8, wherein said bulk seed supply comprises a seed hopper and wherein said hopper includes a longitudinally extending aperture towards the bottom of said hopper and a feed roller positioned in said aperture and extending longitudinally thereof whereby a longitudinally extending outlet for said seed is defined above said seed spreading member between said roller and an edge of said aperture.

10. Apparatus as claimed in claim 9, wherein said de-awning means comprises a longitudinally extending flame burner positioned relative to said cylinder to provide a flame extending the length of said cylinder whereby said seeds held in said multiplicity of apertures are de-awned by burning of the awns thereof by said flame as same are conveyed past said flame burner.

11. Apparatus as claimed in claim 10, wherein said means arranged to collect the de-awned seeds is positioned below said cylinder to catch seeds falling from said apertures as same are conveyed beyond said flame burner.

12. Apparatus as claimed in claim 11, wherein said means arranged to collect the de-awned seed comprises a seed collection tray positioned below said cylinder and including conveying means positioned in a lower part of said tray to deliver seed from said tray.

13. Apparatus as claimed in claim 12 including suction means to withdraw soot from the atmosphere adjacent said flame burner and over said collection tray.

14. Apparatus for removing the awn from seed, comprising a substantially cylindrical seed support means arranged to rotate about its longitudinal axis and comprising a multiplicity of seed holding apertures therein to hold said seed such that the awn thereof is exposed for de-awning, seed supply means positioned adjacent said cylinder to feed seeds thereto as said cylinder rotates about said axis, de-awning means positioned adjacent said cylinder support to remove the awn from said seeds held thereby, and means arranged to collect the de-awned seed.

15. A process for removing the awn from seeds, comprising the steps of:

depositing seeds by a seed supply means onto a moving seed support and conveying means providing a multiplicity of seed holding apertures therein for holding seeds individually such that the awn thereof is exposed for de-awning and causing said support and conveying means to vibrate, such that said seeds are entered individually into said apertures as they are deposited,

causing de-awning means to remove the awns from said seeds as they are conveyed past said de-awning means by said seed supported conveying means, and

collecting the de-awned seed by means arranged to collect the de-awned seed, from said seed support and conveying means.

16. A process as claimed in claim 15, wherein said seed support and conveying means is substantially in the form of a cylinder rotating about it's longtidunal axis and comprising said multiplicity of seed holding apertures spaced over the exposed surface thereof and extending substantially towards said longtidunal axis from said surface, and wherein said deawning means is positioned in relation to said cylinder such that seeds held in said apertures are conveyed past said de-awning means by rotation of said cylinder.

17. A process as claimed in claim 15, including depositing said seeds by release of said seeds for de-awning over said cylinder from above from said seed supply means whereby said seeds are deposited on said cylinder by falling under gravity.

18. A process as claimed in claim 17, wherein said seeds are released from a bulk supply of seeds and are spread by means for spreading said seed delivered from said bulk supply over said cylinder.

19. A process as claimed in claim 17, wherein said seed spreading means comprises a vibrating member extending over said cylinder below said bulk seed supply and comprising a multiplicity of seed releasing apertures through said spreading member from said bulk supply to said cylinder whereby seeds delivered from said bulk supply are caught on and spread over said member and fall therefrom though said apertures to deposit on said cylinder.

20. A process as claimed in claim 19, wherein said de-awning means comprises a longitudinally extending flame burner positioned relative to said cylinder and providing a flame extending the length of said cylinder whereby said seeds held in said multiplicity of apertures are de-awned by burning of the awns thereof by said flame as same are conveyed past said flame burner.

21. A process as claimed in claim 20, wherein said means arranged to collect the de-awned seeds is positioned below said cylinder support means to catch seeds falling from said apertures as same are conveyed beyond said flame burner.

22. Seed whenever de-awned by the apparatus of any one of claims 1 to 14.

23. Seed whenever de-awned by the process of any one of claims 15 to 21.

FIG 1

**FIG 2**

0 257 839

**FIG 3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | WO-A-8 001 531 (LOISEAU)  <br><br> * Pages 3,4; figures 1,2 * <br><br> --- | 1,2,10 -12,14 -16,20 -23 | A 01 C    1/00 <br> A 01 F   12/42 |
| A | DE-C- 915 873 (KNOLLE) <br> * Page 2, lines 31-77; figure 1 * <br><br> --- | 1 | |
| A | DE-C- 569 989 (MIAG) <br> * Page 2, lines 28-61; figures 1,2,3,4 * <br><br> ----- | 1 | |

| TECHNICAL FIELDS SEARCHED (Int. Cl.4) |
|---|
| A 01 C <br> A 01 F <br> B 02 B <br> A 23 N |

The present search report has been drawn up for all claims

| Place of search | Date of completion of the search | Examiner |
|---|---|---|
| THE HAGUE | 06-11-1987 | VERMANDER R.H. |